# EUROPEAN PATENT SPECIFICATION

(11) **EP 1 375 341 B1**
(45) Date of publication and mention of the grant of the patent: **22.08.2007**
(21) Application number: 03013520.6
(22) Date of filing: 13.06.2003
(51) Int. Cl.: B64C 3/14, B64C 3/10

(54) **Spanwise tailoring of a trailing edge wedge to a wing**
Spannweitenanpassung eines Hinterkantenkeils an einem Flügel
Ajustement selon l'envergure du coin de bord de fuite à une aile

(30) Priority: 20.06.2002 US 175612
(43) Date of publication of application: 02.01.2004
(73) Proprietor: The Boeing Company, Chicago, IL 60606-1596 (US)
(72) Inventor: Gregg III, Robert D., Fullerton, CA 92833 (US); Vassberg, John Charles, Long Beach, CA 90803 (US); Pitera, David M., Fountain Valley, CA 92708 (US)
(74) Representative: Lindner, Michael

(56) References cited:
- US-A- 1 506 817
- US-A- 4 542 868
- US-B1- 6 382 561

## Description

### CROSS-REFERENCE TO RELATED APPLICATIONS

The present invention is related to copending U.S.Application Serial No. 10/175,623 entitled Spanwise Tailoring of Divergent Trailing Edge Wings, published as US 6592072 and EP 1375340.

### FIELD OF THE INVENTION

The invention relates to the field of transonic wings for aircraft and more particularly to a trailing edge device that increases the coefficient of lift, decreases the coefficient of drag with the combined effect of reducing fuel consumption.

### BACKGROUND OF THE INVENTION

The aerodynamic drag of modern transonic wings consists of three components: lift-induced drag, profile drag and compressibility drag. Profile drag includes skin friction related drag and base drag due to trailing-edge bluntness. At relatively slower speeds (Mach numbers below the design condition), the wing drag consists of the lift-induced drag and profile drag. As the speed is increased, shock waves appear on the wing surface. These shock waves cause increased drag and are the major portion of the drag that was referred to above as compressibility drag. Compressibility drag increases dramatically with increasing speed and strongly limits the efficiency of a wing in terms of its lift-to-drag ratio. For example, modern air transport wing designs are developed to delay the onset of this drag rise until a point that is above a cruise design speed condition. The aerodynamics engineer utilizes both wing sweep and airfoil section characteristics as the primary variables in achieving a design that sufficiently delays the onset of compressibility drag while also attaining high lift and low drag.

Another consideration for the aerodynamics engineer related to the design of an efficient aircraft is trim drag. Trim drag is the drag associated with balancing the lifting forces with the center of gravity of the flight vehicle. Wings in general have a nose-down pitching moment caused by the distribution of lift, both chordwise and spanwise, over typical operating conditions.

One approach for obtaining a wing with an improved airfoil design is set forth in U.S. Patent No. 4,542,868 to Boyd entitled "Trailing Edge Device For An Airfoil" which constitutes the closest prior art. The methodology set forth in the '868 patent utilizes a small, generally triangular wedge-like member for attachment to or near the trailing edge of an airfoil, which improves the coefficient of lift and reduces the coefficient of drag providing an overall increase in fuel economy at cruise conditions. While applying the result to the entire span of the wing (i.e., the distance between the centerline of the fuselage of the aircraft and the distal end of the wing) can yield some improvement in the efficiency of wings, further improvements are nonetheless possible.

In this regard, we have noted that the application of a wedge shaped member having a substantially constant cross-section to the trailing edge of an airfoil may unnecessarily increase the base drag and the pitching moment of the wing. Accordingly, there remains a need in the art for an improved application of the "868 patent across the wing trailing edge.

### SUMMARY OF THE INVENTION

In one preferred form, the present invention as defined in claim 1 provides a method for forming an improved trailing edge wedge for a wing. The method includes the steps of: a) providing a baseline trailing edge wedge; b) coupling the baseline trailing edge wedge to the wing to form a baseline assembly; c) segregating the baseline assembly into a plurality of airfoil segments, each of the airfoil segments being defined by a set of characteristics including a trailing edge bluntness, a trailing edge included angle and a trailing edge wedge height; and d) tailoring a spanwise variation of the baseline trailing edge wedge in terms of a trailing edge bluntness, a trailing edge included angle and a trailing edge wedge height at each of the airfoil segments to form the improved wing assembly. Between step (c) and step (d), the methodology may further include the step of assessing an aerodynamic benefit to determine a plurality of most favorable airfoil segment configurations.

In another preferred form, the present invention as defined in claim 6 provides a wing assembly having an airfoil structure and a trailing edge wedge. The airfoil structure includes an inboard wing portion, which is configured to abut a fuselage, and a mid-span wing portion, which is coupled to a distal end of the inboard wing portion, and a trailing edge that extends the length of inboard wing and mid-span wing portions. The trailing edge wedge is coupled to the wing structure proximate the trailing edge. The trailing edge wedge extending throughout the entirety of the mid-span wing portion and no more than partially through the inboard wing portion. Preferably, the outboard wing portion is configured such that at least a portion of the outboard wing includes a trailing edge wedge but to a lesser degree than the mid-span wing.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

Additional advantages and features of the present invention will become apparent from the subsequent description and the appended claims, taken in conjunction with the accompanying drawings, wherein:

Figure 1 is a top plan view of a wing that is being modified in accordance with the teachings of the present invention;

Figures 2a, b, are airfoil sectional views taken along the line 2-2 of Figure 1;

Figure 3 is a top plan view of a wing constructed in accordance with the teachings of the present invention;

Figure 4 is an airfoil sectional view taken along the line 4-4 of Figure 3;

Figures 5a, b are airfoil sectional views taken along the line 5a-5a of Figure 3;

Figure 6 is a bottom plan view illustrating a wing assembly that is being modified in accordance with the teachings of the present invention;

Figure 7 is an airfoil sectional view taken along the line 7-7 of Figure 6; and

Figure 8 is a perspective view illustrating a wing assembly having a tailored divergent trailing edge constructed in accordance with the teaching of the present invention.

### DETAILED DESCRIPTION OF THE PREFERRED EMBODIMENTS

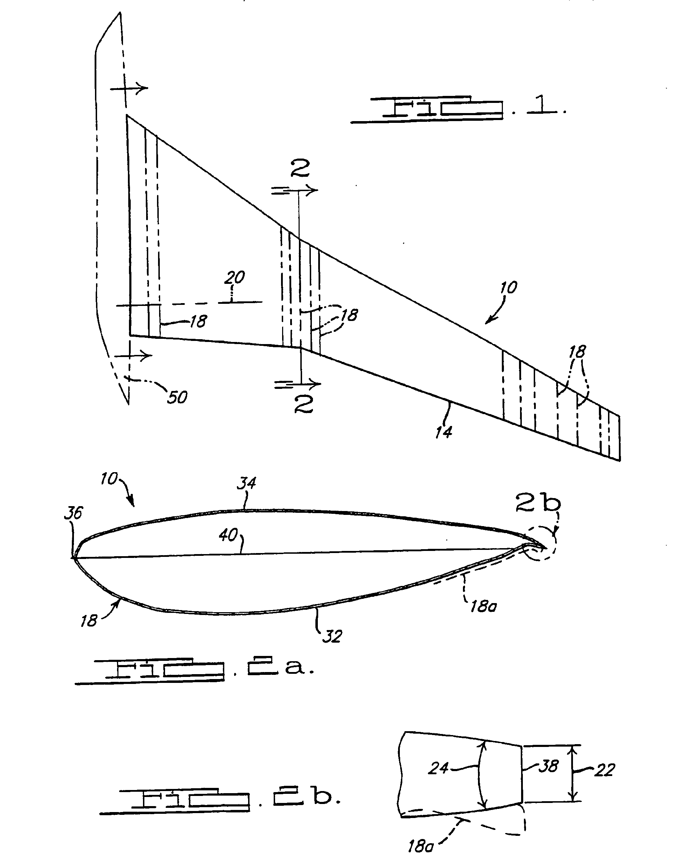

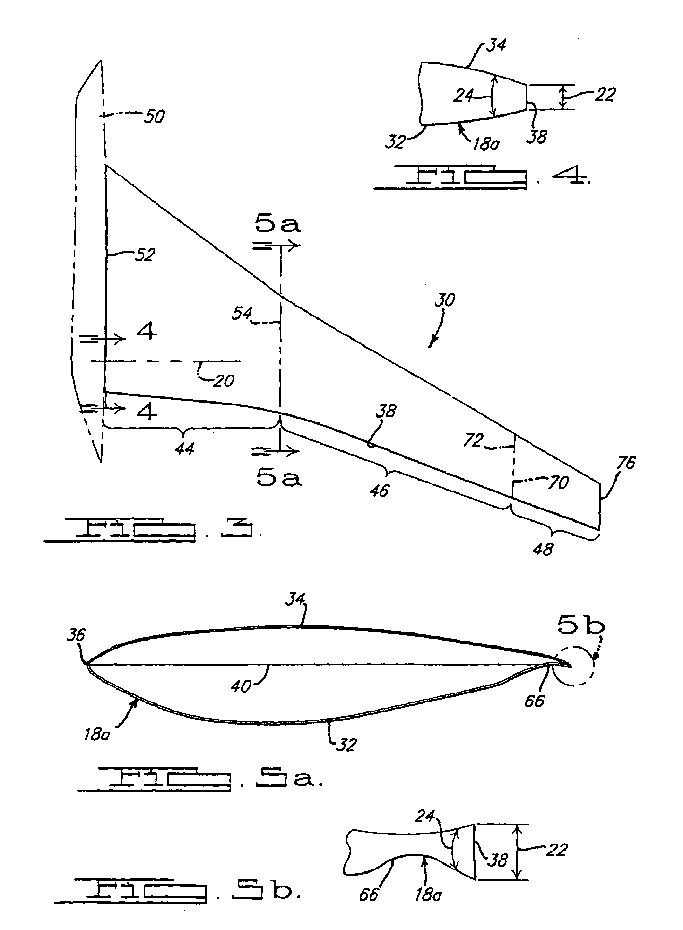

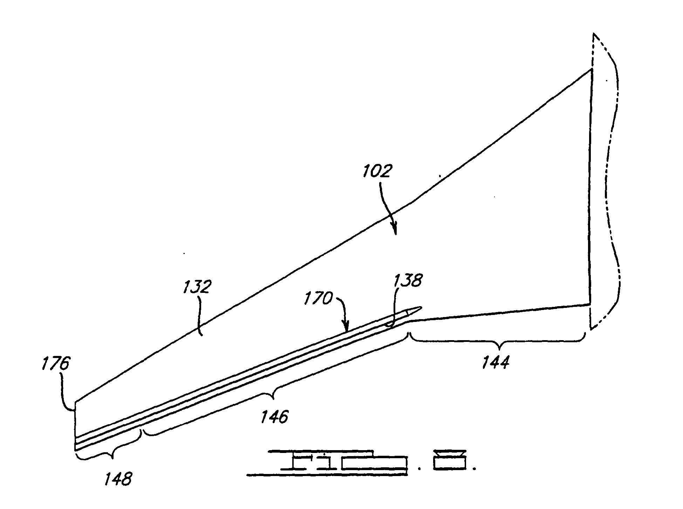

With reference to Figures 1 and 2a, b of the drawings, the basic approach to designing a wing with a trailing edge wedge in accordance with the teachings of the present invention is to start with a baseline wing 10. In the particular example provided, the baseline wing 10 has a conventional trailing edge 14. Those skilled in the art will appreciate, however, that the baseline wing 10 may be otherwise configured. For example, the baseline wing 10 may include a baseline trailing edge wedge 100 (Figure 6) that extends, for example, over the entire span of the baseline wing 10.

The baseline wing 10 is divided into a plurality of airfoil segments 18 that are taken through the baseline wing 10 in a direction that is parallel to the direction of air flow across the baseline wing 10 (i.e., the airfoil segments 18 are taken in a direction that is generally perpendicular to the longitudinal axis 20 of the baseline wing 10). As those skilled in the art will appreciate, each airfoil segment 18 can be defined by a set of parameters that includes trailing edge bluntness 22 and trailing edge included angle 24.

The airfoil segments 18 need not be equally spaced apart across the span of the baseline wing 10, but should be positioned so as to permit various critical areas of the baseline wing 10 to be thoroughly analyzed. For example, a typical transonic wing will have the highest per area loading in a midspan region and as such, at least one airfoil segment 18, and preferably several airfoil segments 18, should be positioned in the areas of transition into and out of the midspan region. Analysis with modern computers and analytic tools such as a Navier-Stokes CFD calculation permit the baseline wing 10 to be segregated into a plurality of very closely spaced airfoil segments 18, which permits the aerodynamic engineer to evaluate the entire baseline wing 10 in terms of wave drag, profile drag, induced drag and trim drag, the resultant of which is typically expressed as ML/D. Other characteristics could also or alternatively be assessed, including wing bending moments and/or buffet boundary.

With the baseline wing 10 segmented into the plurality of airfoil segments 18, modifications are next made to various parameters of the set of parameters for each airfoil segment 18, such as to the trailing edge bluntness 22 or the trailing edge included angle 24. Thereafter, the modified airfoil segment 18a is preferably analyzed to assess the aerodynamic benefit of the modifications. As noted above, the analysis may be performed analytically, or may be performed empirically as in a wind tunnel, a water tunnel or in actual flight. The steps of modifying the airfoil segment 18 and analyzing the modified airfoil segment 18a are repeated using different parameters until a most favorable airfoil segment configuration has been identified for each of the locations of the airfoil segments 18. Thereafter, the most favorable airfoil segment configurations are amalgamated to obtain an improved wing. It should be noted that modifications to any one airfoil segment 18 will likely effect the performance of adjacent airfoil segments 18 and as such, the optimization of any particular airfoil segment 18 cannot be performed on an independent basis.

The rationale for tailoring the spanwise variation of the airfoil segments is to more fully utilize concepts, such as a diverging trailing edge or a trailing edge wedge, in the areas where they provide a benefit and to omit them from areas where they provide little or no benefit. Design of a wing with this methodology provides an airfoil that is relatively more efficient.

### Example I: Spanwise Tailoring of a Divergent Trailing Edge to a Transonic Wing

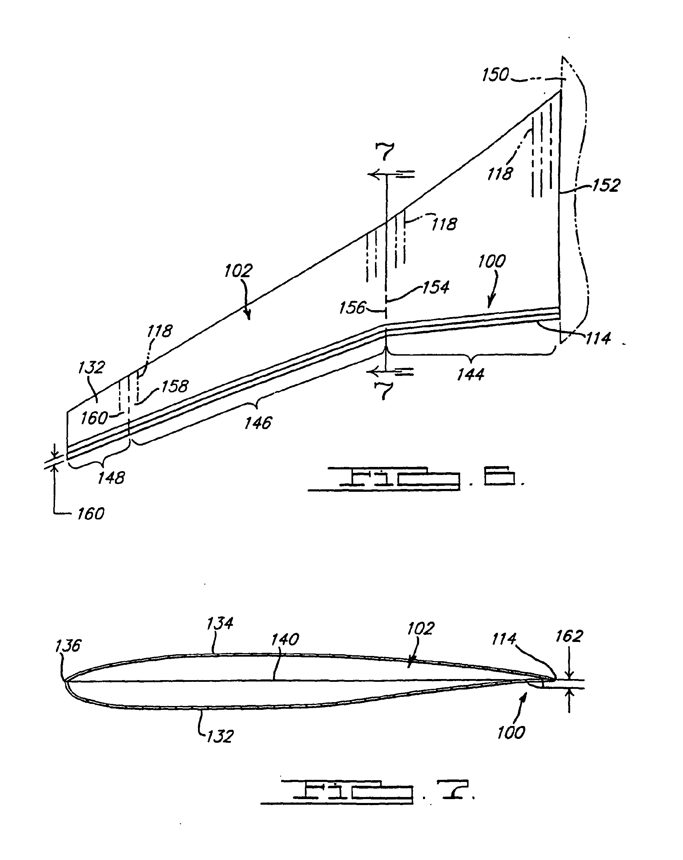

A systematic study of variations in the spanwise trailing edge bluntness 22 and the trailing edge included angle 24 was conducted to maximize the aerodynamic properties of the baseline wing 10 of Figures 1 and 2, and more specifically to improve transonic wave drag and maximize both range and fuel burn. Both the baseline wing 10 and the improved wing 30 (Figure 3) can be generally described as including a high pressure surface 32, a low pressure surface 34 that is disposed opposite the high pressure surface 32, a leading edge 36 that connects the high pressure and low pressure surfaces 32 and 34 on a forward side, and a trailing edge base 38 that connects the high pressure and low pressure surfaces 32 and 34 on a rearward side that is opposite the leading edge 36. A chord 40 couples the leading edge 36 and the trailing edge base 38.

The improved wing 30 is illustrated to be segregated into three distinct zones: an inboard wing portion 44, a mid-span wing portion 46 and an outboard wing portion 48. The inboard wing portion 44 is configured to be coupled to an inboard side of a fuselage 50 and has a length of about 30% of the span of the improved wing 30. The inboard wing portion 44 is configured with a proximal end 52, which abuts the fuselage 50, and a distal end 54, which abuts the mid-span wing portion 46. As illustrated in Figure 4, the proximal end 52 is configured such that the trailing edge base 38 has relatively small amount of trailing edge bluntness 22 (e.g., about 0.1% of the magnitude of the chord 40).

As illustrated in Figures 5a, b the distal end 54 of the inboard wing portion 44 is configured such that the trailing edge base 38 has a relatively larger amount of trailing edge bluntness 22 (e.g., about 0.5% of the chord 40) and high pressure and low pressure surfaces 32 and 34 that are defined by diverging slopes in an area adjacent the blunt trailing edge base 38, which is illustrated to be generally perpendicular to the chord 40. In the particular embodiment illustrated, the diverging slopes of the high pressure and low pressure surfaces 32 and 34 define an included trailing edge angle 24 of about -15° and the high pressure surface 32 of the inboard wing portion 44 includes a region of high local concentrated concave curvature 66 immediately prior to the trailing edge base 38. The transition between the proximal and distal ends 52 and 54 proceeds in a tailored manner, which may or may not be uniform, but could also include discontinuous variations, too. Preferably, the trailing edge base 38 has a height that varies between about 0.1% of the chord 40 to about 1.0% of the chord 40 between the proximal and distal ends 52 and 54 of the inboard wing portion 44. Also preferably, the region of high local concave curvature 66 occurs within about the last 5% of the chord 40.

Returning to Figure 3, the mid-span wing portion 46 is coupled to the distal end 54 of the inboard wing portion 44 and extends to a point that is located at about 80% of the span of the improved wing 30. In the particular embodiment provided, the configuration of the trailing edge base 38 and the high pressure surface (not specifically shown) of the mid-span wing portion 46 are uniform over the length of the mid-span wing portion 46 and are substantially identical to the configuration of distal end 54 of the inboard wing portion 44.

The outboard wing portion 48 is coupled at a proximal end 70 to the distal end 72 of the mid-span wing portion 46. The configuration of the trailing edge base 38 and the high pressure surface (not specifically shown) at the proximal end 70 of the outboard wing portion 48 are configured substantially identically to the configuration of the trailing edge base 38 and the high pressure surface (not specifically shown) at the distal end 72 of the mid-span wing portion 46. Both the trailing edge bluntness and the included trailing edge angle reduce at a uniform rate to about -10° and about 0.3% of the chord 40, respectively, at the tip 76 of the improved wing 30.

### Example II: Spanwise Tailoring Of A Trailing Edge Wedge To A Wing

With reference to Figures 6 and 7, a systematic study of variations in the spanwise configuration of a baseline trailing edge wedge 100 was conducted to maximize the aerodynamic properties of a conventional wing 102, and more specifically to improve transonic wave drag and maximize both range and fuel burn. The wing 102 can be generally described as including a high pressure surface 132, a low pressure surface 134 that is disposed opposite the high pressure surface 132, a leading edge 136 that connects the high pressure and low pressure surfaces 132 and 134 on a forward side, and a trailing edge 114 that is connected to the high pressure and low pressure surfaces 132 and 134 on a rearward side that is opposite the leading edge 136. A chord 140 couples the leading edge 136 and the trailing edge 114. The wing 102 is illustrated to be segregated into three distinct zones: an inboard wing portion 144, a mid-span wing portion 146 and an outboard wing portion 148. The inboard wing portion 144 is configured to be coupled to an inboard side of a fuselage 150 and has a length of about 30% of the span of the wing 102. The inboard wing portion 144 is configured with a proximal end 152, which abuts the fuselage 50, and a distal end 154, which abuts a proximal end 156 of the mid-span wing portion 146. The mid-span wing portion 146 has a length of about 50% of the span of the wing 102 and is coupled at its distal end 158 to the proximal end 160 of the outboard wing portion 148.

The baseline trailing edge wedge 100 is installed at the trailing edge 114 of the wing 102 and is located forwardly of the trailing edge 114 by a distance 160 of 0.0% of the chord 140 to less than about 4.0% of the chord 140. The baseline trailing edge wedge 100 has a height 162 of about 0.4% of the chord 140 to about 0.8% of the chord 140 and a wedge angle of about 10° to about 45°. The wing 102 with the baseline trailing edge wedge 100 were segregated into a plurality of airfoil segments 118 that were optimized using the iterative process described above to develop an improved trailing edge wedge 170, which is illustrated in Figure 8.

In the particular example provided, the improved trailing edge wedge 170 extends over only the mid-span wing portion 146 and the outboard wing portion 148. The portion of the improved trailing edge wedge 170 that is coupled to the mid-span wing portion 146 has a trailing edge base 138 with a trailing edge bluntness of about 0.5% of the chord 140, which is maintained over the length of the outboard wing portion 148. The size of the improved trailing edge wedge 170, however, decreases slightly toward the tip 176 of the outboard wing portion 148. As those skilled in the art will appreciate, further variations in the trailing edge bluntness and the size (e.g., height 162 and wedge angle) of the baseline trailing edge wedge 100 may also be studied to maximize the aerodynamic benefit.

While the invention has been described in the specification and illustrated in the drawings with reference to a preferred embodiment, it will be understood by those skilled in the art that various changes may be made and equivalents may be substituted for elements thereof without departing from the scope of the invention as defined in the claims. In addition, many modifications may be made to adapt a particular situation or material to the teachings of the invention without departing from the essential scope thereof. Therefore, it is intended that the invention not be limited to the particular embodiment illustrated by the drawings and described in the specification as the best mode presently contemplated for carrying out this invention, but that the invention will include any embodiments falling within the foregoing description and the appended claims.

## Claims

1. A method for forming an improved trailing edge wedge for a wing having a chord and a span, the method comprising the steps of:
a) providing a baseline trailing edge wedge (100; 170);
b) coupling the baseline trailing edge wedge (100; 170) to the wing (102) to form a baseline assembly;
c) segregating the baseline assembly into a plurality of airfoil segments (18), each of the airfoil segments (18) being defined by a set of characteristics including a trailing edge bluntness (22), a trailing edge included angle (24) and a trailing edge wedge height (162); and
d) tailoring a spanwise variation of the baseline trailing edge wedge in terms of a trailing edge bluntness (22), a trailing edge included angle (24) and a trailing edge wedge height (162) at each of the airfoil segments (18) to form the improved wing assembly (30).

2. The method of claim 1, further comprising between steps (c) and (d) the step of:
modifying at least one of the characteristics in the set of characteristics for at least one airfoil segment (18) to provide a modified airfoil segment (18).

3. The method of claim 2, further comprising the step of assessing an aerodynamic benefit of the at least one modified airfoil segment (18).

4. The method of claim 3, further comprising the step of repeating the modifying and assessing steps to determine a plurality of most favorable airfoil segment configurations.

5. The method of claim 4, wherein the tailoring step configures the improved trailing edge wedge (170) such that when the improved trailing edge wedge is coupled to the wing to form an improved wing assembly, the improved wing assembly including the plurality of most favorable airfoil segment configurations.

6. A wing assembly having a chord and a span, the wing assembly comprising:
a wing structure having an inboard wing portion (44; 144), which is configured to abut a fuselage (50; 150), and a mid-span wing portion (46; 146), which is coupled to a distal end (54; 154) of the inboard wing portion (44; 144), the wing structure having a trailing edge (114) that extends the length of inboard wing and mid-span wing portions; and
a trailing edge wedge (170) that is coupled to the wing structure proximate the trailing edge (114), the trailing edge wedge (170) extending throughout the entirety of the mid-span wing portion (46; 146) and no more than partially through the inboard wing portion (44; 144).

7. The wing assembly of claim 6, wherein the trailing edge wedge (170) is not coupled to the inboard wing portion (44; 144).

8. The wing assembly of claim 6 or 7, wherein a portion of the trailing edge wedge (170) that is coupled to the mid-span portion (46; 146) has a trailing edge bluntness (22) of about 0.5% of the chord.

9. The wing assembly of any of claims 6 - 8, wherein the mid-span wing portion (46; 146) has a length that is about 50% of the span of the wing structure.

10. The wing assembly of any of claims 6 - 9, wherein the inboard wing portion (44; 144) has a length that is about 30% of the span of the wing structure.

## Patentansprüche

1. Verfahren zum Ausbilden eines verbesserten Hinterkantenkeils eines Flügels mit einer Flügeltiefe und einer Spannweite, wobei das Verfahren die Schritte aufweist:
a) Bereitstellen des Basis-Hinterkantenkeils (100; 170);
b) Verbinden des Basis-Hinternkantenkeils (100; 170) mit dem Flügel (102), um eine Basis-Anordnung auszubilden;
c) Aufteilen der Basis-Anordnung in eine Vielzahl von Tragflächen-Segmenten (18), wobei jedes der Tragflächen-Segmente (18) durch einen Satz von Eigenschaften definiert wird, die die Hinterkanten-Stumpfheit (22), den von der Hinterkante eingeschlossenen Winkel (24) und eine Höhe des Hinterkantenkeils (162) umfassen; und
d) Maßschneidern einer Variation des Basis-Hinternkantenkeils über die Spannweite im Hinblick auf die Hinterkanten-Stumpfheit (22), den von der Hinterkante eingeschlossenen Winkel (24) und die Höhe des Hinterkantenkeils (162) an jedem der Tragflächen-Segmente (18), um eine verbesserte Flügel-Anordnung (30) zu bilden.

2. Verfahren nach Anspruch 1, ferner mit dem Schritt zwischen den Schritten (c) und (d):
Modifizieren von zumindest einer der Eigenschaften in dein Satz von Eigenschaften für zumindest ein Tragflächen-Segment (18), um ein modifiziertes Tragflächen-Segment (18) bereitzustellen.

3. Verfahren nach Anspruch 2, ferner mit dem Schritt: Einschätzen eines aerodynamischen Vorteils des zumindest einen modifizierten Tragflächen-Segments (18).

4. Verfahren nach Anspruch 3, ferner mit dem Schritt: Wiederholen der Modifizierungs- und Einschätzungsschritte, um eine Vielzahl von besten Tragflächen-Segment-Konfigurationen zu bestimmen.

5. Verfahren nach Anspruch 4, wobei der Maßschneiderungsschritt den verbesserten Hinterkantenkeil (170) konfiguriert derart, dass, wenn der verbesserte Hinterkantenkeil mit dem Flügel verbunden wird, um eine verbesserte Flügel-Anordnung zu erhalten, die verbesserte Flügel-Anordnung die Vielzahl von günstigsten Tragflächen-Segment-Konfigurationen umfasst.

6. Flügel-Anordnung mit einer Flügeltiefe und einer Spannweite, wobei die Flügel-Anordnung aufweist:
eine Flügelstruktur mit einem innenliegenden Flügelabschnitt (44; 144), der ausgelegt ist, um am Rumpf (50; 150) anzuschlagen, und einem mittleren Flügelabschnitt (46; 146), der mit einem distalen Ende (54, 154) des innenliegenden Flügelabschnitts (44; 144) verbunden ist, wobei die Flügelstruktur eine Hinterkante (114) aufweist, die sich entlang des innenliegenden Flügelabschnitts und des mittleren Flügelabschnitts erstreckt; und
einen Hinterkantenkeil (170), der mit der Flügelstruktur nahe der Hinterkante (114) verbunden ist, wobei sich der Hinterkantenkeil (170) über den gesamten mittleren Flügelabschnitt (46; 146) und nicht mehr als teilweise über den innenliegenden Flügelabschnitt (44; 144) erstreckt.

7. Flügel-Anordnung nach Anspruch 6, wobei der Hinterkantenkeil (170) nicht mit dem innenliegenden Flügelabschnitt (44; 144) verbunden ist.

8. Flügel-Anordnung nach Anspruch 6 oder 7, wobei ein Abschnitt des Hinterkantenkeils (170), der mit dem mittleren Abschnitt (46; 146) verbunden ist, eine Hinterkanten-Stumpfheit (22) von etwa 0,5 % der Flügeltiefe aufweist.

9. Flügel-Anordnung nach einem der Ansprüche 6-8, wobei der mittlere Flügelabschnitt (46; 146) eine Länge hat, die etwa 50 % der Spannbreite der Flügelstruktur beträgt.

10. Flügel-Anordnung nach einem der Ansprüche 6 - 9, wobei der innenliegende Flügelabschnitt (44; 144) eine Länge besitzt, die etwa 30 % der Spannbreite der Flügelstruktur beträgt.

## Revendications

1. Procédé pour former un coin de bord de fuite amélioré pour une aile ayant une corde et une envergure, le procédé comprenant les étapes consistant à :
a) fournir un coin de bord de fuite de ligne de base (100 ; 170) ;
b) coupler le coin de bord de fuite de ligne de base (100 ; 170) à l'aile (102) pour former un ensemble de ligne de base ;
c) ségréguer l'ensemble de ligne de base en une pluralité de segments d'aile (18), chacun des segments d'aile (18) étant défini par un ensemble de caractéristiques comprenant un arrondi de bord de fuite (22), un angle interne de bord de fuite (24) et une hauteur de coin de bord de fuite (162) ; et
d) ajuster une variation selon l'envergure du coin de bord de fuite de ligne de base sous la forme d'un arrondi de bord de fuite (22), d'un angle interne de bord de fuite (24) et d'une hauteur de coin de bord de fuite (162) au niveau de chacun des segments d'aile (18) de façon à former un assemblage d'aile amélioré (30).

2. Procédé selon la revendication 1, comprenant en outre entre les étapes (c) et (d) l'étape consistant à :
modifier au moins une des caractéristiques de l'ensemble de caractéristiques pour au moins un segment d'aile (18) de façon à fournir un segment d'aile (18) modifié.

3. Procédé selon la revendication 2, comprenant en outre l'étape consistant à évaluer un avantage aérodynamique d'au moins un segment d'aile (18) modifié.

4. Procédé selon la revendication 3, comprenant en outre l'étape consistant à répéter les étapes de modification et d'évaluation pour déterminer une pluralité de plus favorables configurations de segment d'aile.

5. Procédé selon la revendication 4, dans lequel l'étape d'ajustement configure le coin de bord de fuite amélioré (170) de sorte que lorsque le coin de bord de fuite amélioré est couplé à l'aile pour former un assemblage d'aile amélioré, l'assemblage d'aile amélioré comprend la pluralité de plus favorables configurations de segment d'aile.

6. Assemblage d'aile ayant une corde et une envergure, l'assemblage d'aile comprenant :
une structure d'aile ayant une partie d'aile interne (44 ; 144), qui est configurée de façon à abouter un fuselage (50 ; 150), et une partie d'aile à mi-envergure (46 ; 146), qui est couplée à une extrémité distale (54 ; 154) de la partie d'aile interne (44 ; 144), la structure d'aile ayant un bord de fuite (114) qui est le prolongement de la longueur des parties d'aile interne et d'aile à mi-envergure ; et
un coin de bord de fuite (170) qui est couplé à la structure d'aile à proximité du bord de fuite (114), le coin de bord de fuite (170) se prolongeant à travers l'intégralité de la partie d'aile à mi-envergure (46 ; 146) et pas plus que partiellement à travers la partie d'aile interne (44 ; 144).

7. Assemblage d'aile selon la revendication 6, dans lequel le coin de bord de fuite (170) n'est pas couplé à la partie d'aile interne (44 ; 144).

8. Assemblage d'aile selon la revendication 6 ou 7, dans lequel une partie du coin de bord de fuite (170) qui est couplée à la partie à mi-envergure (46 ; 146) possède un arrondi de bord de fuite (22) d'environ 0,5 % de la corde.

9. Assemblage d'aile selon l'une quelconque des revendications 6 à 8, dans lequel la partie d'aile à mi-envergure (46 ; 146) a une longueur qui représente environ 50 % de l'envergure de la structure d'aile.

10. Assemblage d'aile selon l'une quelconque des revendications 6 à 9, dans lequel la partie d'aile interne (44 ; 144) a une longueur qui représente environ 30 % de l'envergure de la structure d'aile.
